# EUROPEAN PATENT SPECIFICATION

(11) **EP 1 310 311 B1**
(45) Date of publication and mention of the grant of the patent: **13.09.2006**
(21) Application number: 03002652.0
(22) Date of filing: 30.01.1997
(51) Int. Cl.: B23C 5/20

(54) **Throw away chip clamp mechanism**
Schneideinsatzspannmechanismus
Mécanisme de serrage de plaquette de coupe

(30) Priority: 31.01.1996 JP 1604596
(43) Date of publication of application: 14.05.2003
(62) Divisional of application: 97101471.7
(73) Proprietor: MITSUBISHI MATERIALS CORPORATION, Chiyoda-ku, Tokyo 100-8117 (JP)
(72) Inventor: Arai, Tatsuo Tsukuba Plant, Yuuki-gun, Ibaraki-ken (JP); Saito, Takayoshi Tsukuba Plant, Yuuki-gun, Ibaraki-ken (JP); Aso, Norio Tsukuba Plant, Yuuki-gun, Ibaraki-ken (JP)
(74) Representative: HOFFMANN EITLE

(56) References cited:
- US-A- 4 693 641
- US-A- 4 966 500

## Description

### Industrial Field of the Invention

The present invention relates to a throw away chip for mounting with a clamp mechanism for detachably mounting a throw away chip to the chip mounting seat of the tool main body of a throw away type, that is, disposable bit, boring bar, cutter, end mill and the like, and more specifically, to a throw away chip clamp mechanism capable of simply mounting a throw away chip and preventing the flying-out of the chip, that is, enhancing the displacement prevention effect thereof.

### Description of the Related Art

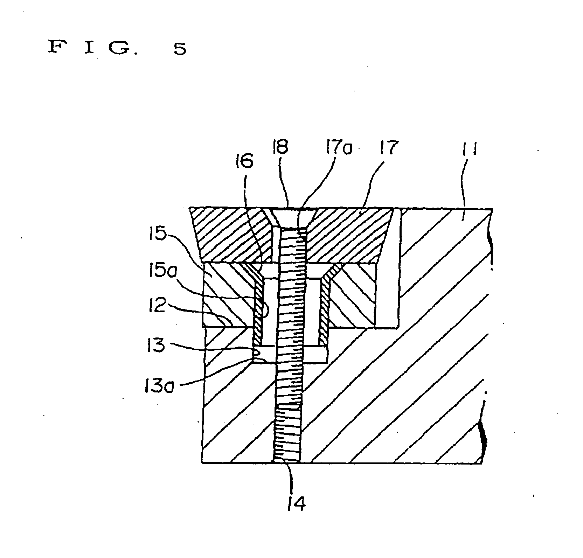

As a conventional throw away chip clamp mechanism, there is proposed a throw away chip clamp mechanism as disclosed in, for example, Japanese Unexamined Utility Model Publication No. 64-23302. As shown in FIG. 5, the throw away chip clamp mechanism is composed of a tool main body 11 having a bottomed positioning hole 13 formed to a chip mounting seat 12 and a mounting screw hole 14 formed to the bottom surface 13a of the positioning hole 13, a seat 15 mounted on the chip mounting seat 12 and having a locking hole 15a formed approximately at the center thereof and having a diameter approximately as large as that of the positioning hole 13, a cylindrical locking member 16 to be engaged with the locking hole 15a of the seat 15 and the positioning hole 13 and a chip mounting screw 18 inserted into the chip hole 17a of a throw away chip 17 and the locking member 16 with the head portion thereof locked to the chip hole 17a of the throw away chip 17 and the extreme end thereof threaded with the mounting screw hole 14 of the positioning hole 13 to thereby fix the throw away chip 17 to the chip mounting seat 12 through the seat 15.

However, since the bottomed positioning hole 13 is formed to the chip mounting seat 12 and the locking member 16 is engaged therewith, the mounting screw hole 14 with which the extreme end portion of the chip mounting screw 18 is threaded is formed to the bottom surface 13a of the positioning hole 13 which is located below the chip mounting seat 12. Then, the head portion of the chip mounting screw 18 is locked to the chip hole 17a of the throw away chip 17 located on the surfaces of the locking member 16 and the seat 15. Therefore, since the interval between the chip hole 17a of the throw away chip 17 and the mounting screw hole 14 is made longer than a conventional one, it is difficult to exhibit a high clamp strength and when an excessive centrifugal force is applied to the throw away chip 17, there is a possibility that the throw away chip 17 is displaced.

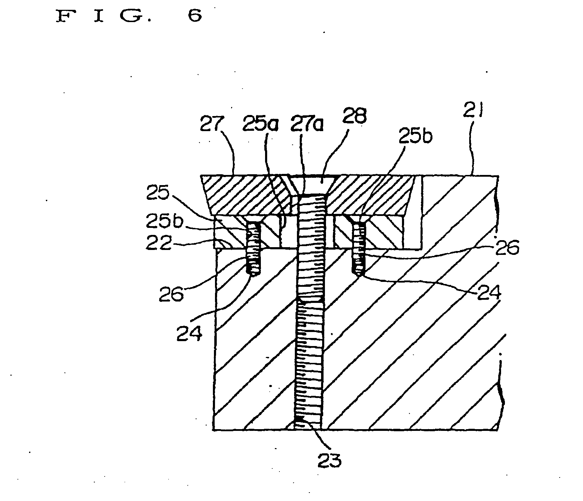

As a throw away chip clamp mechanism having a high displacement prevention effect, there is proposed a throw away chip clamp mechanism as disclosed in Japanese Unexamined Utility Model Publication No. 64-23301. As shown in FIG. 6, the throw away chip clamp mechanism is composed of a tool main body 21 having a mounting screw hole 23 and a plurality of seat mounting screw holes 24 formed to a chip mounting seat 22, a seat 25 placed on the chip mounting seat 22 and having a through hole 25a, which is located at the position corresponding to the mounting screw hole 23 and has a diameter larger than that of the mounting screw hole 23, and locking holes 25b at the positions corresponding to the seat mounting screw holes 24, pins 26 to be engaged with the seat mounting screw holes 24 of the chip mounting seat 22 together with the locking holes 25b of the seat 25 and a chip mounting screw 28 inserted into the chip hole 27a of a throw away chip 27 and the through hole 25a of the seat 25 with the head portion thereof locked to the chip hole 27a of the throw away chip 27 and the extreme end thereof threaded with the mounting screw hole 23 of the chip mounting seat 22 to thereby fix the throw away chip 27 to the chip mounting seat 22 through the seat 25.

In this throw away chip clamp mechanism, since the interval between the chip hole 27a of the throw away chip 27 and the mounting screw hole 23 of the chip mounting seat 22 in FIG. 6 is shorter than that of the throw away chip clamp mechanism shown in FIG. 5, when a centrifugal force is increased, the displacement of the throw away chip 27 can be reduced.

However, since the seat 25 is locked by the plurality of pins 26 in the throw away chip clamp mechanism, the number of parts is increased and they are made small in size. As a result, this mechanism has a disadvantage that it is troublesome to mount the throw away chip 27 to the tool main body 21.

US 4966500 is considered as closest prior art showing a throw away chip for mounting to a seat of a chip clamp mechanism, said chip being approximately a square flat shape and comprising:
a front surface;
a back surface arranged as a seating surface;
the front surface being larger than said back surface;
four side surfaces arranged as flank surfaces;
a cutting edge formed by a ridgeline where a flank surface intersects said front surfaces;
an annular shaped recessed portion in said back surface;
a chip hole formed at the center of the throw away chip so as to pass therethrough from said front surface to said recessed portion to accommodate a chip mounting screw for securing the throw away chip to said chip clamping mechanism;
said chip hole having an inside periphery formed to a taper shape for gradually reducing the diameter of the chip hole towards said annular shaped recessed portion.

### Summary of the Invention

Taking the above circumstances into consideration, it is an object of the present invention to provide a throw away chip for a clamp mechanism capable of simply mounting the throw away chip and enhancing the displacement prevention effect thereof.

A throw away chip according to the invention is defined in claim 1.

Therefore, since the interval between the chip hole of the throw away chip to which the head portion of the chip mounting screw is locked and the screw-hole-provided screw member with which the chip mounting screw is threaded is short, the chip mounting screw is difficult to bend. Thus, when a force for separating the throw away chip from the chip positioning wall surfaces is applied by a centrifugal force or the like, a high displacement prevention effect can be exhibited by the locking of the chip mounting screw. Further, even if the throw away chip is insisted to separate from the chip positioning wall surfaces against the chip mounting screw, it is locked by the screw-hole-provided screw member.

Further, the throw away chip can be mounted by the small number of parts without using small parts.

### Description of the Embodiments

An embodiment of the present invention will be described based on drawings.

### Brief Description of the Drawings

FIG. 1 is a front cross sectional view showing an embodiment of a throw away chip clamp mechanism.
FIG. 2 is a side elevational view showing the throw away chip clamp mechanism of FIG. 1.
FIG. 3 is a side elevational view showing an end mill to which the throw away chip clamp mechanism of FIG. 1 is applied.
FIG. 4 is a front cross sectional view showing another embodiment of the throw away chip clamp mechanism.
FIG. 5 is a front cross sectional view showing an example of a conventional throw away chip clamp mechanism.
FIG. 6 is a front cross sectional view showing another example of the conventional throw away chip clamp mechanism.

### Detailed Description of the Drawings.

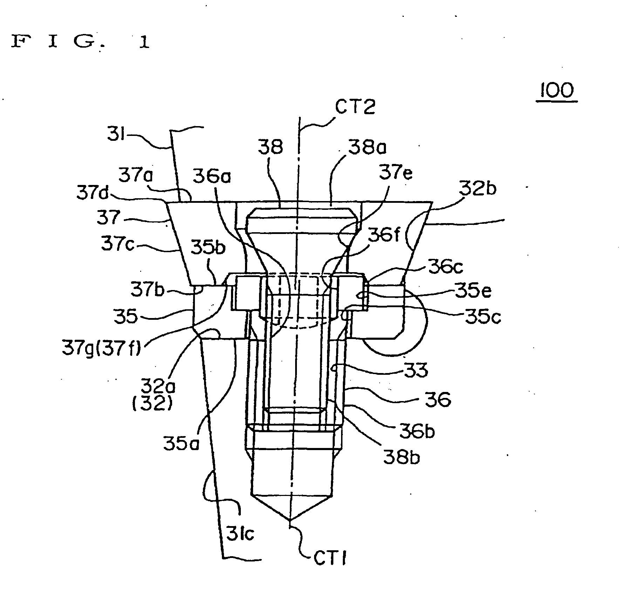

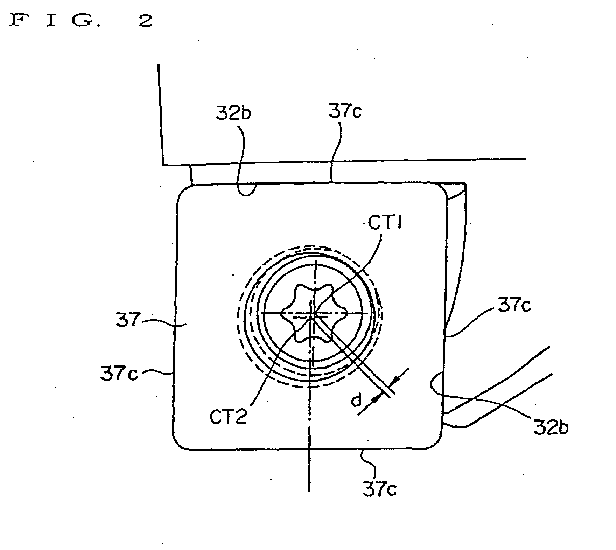

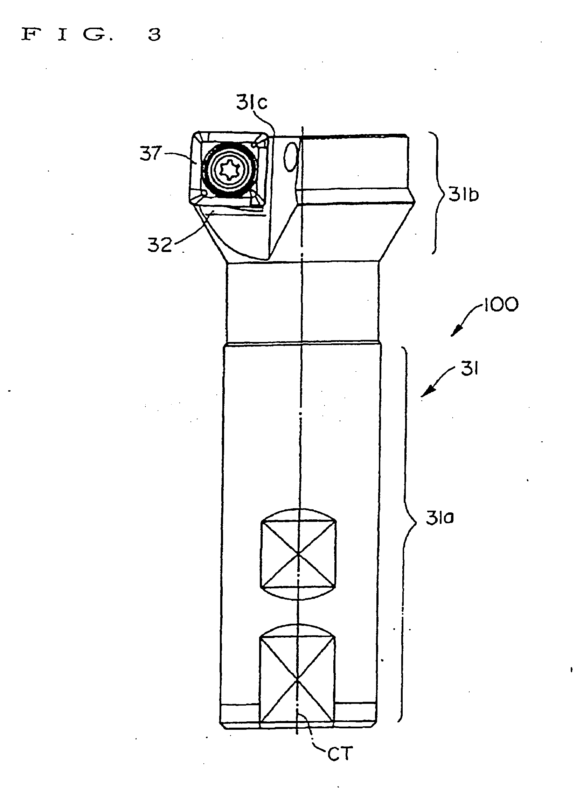

FIG. 3 is a view showing a throw away type end mill 100 to which the throw away chip clamp mechanism is applied. The tool main body 31 of the end mill 100 is composed of steel or the like formed to a columnar shape. The base end portion of the tool main body 31 forms a shank 31a which is mounted to the spindle side of a not shown machine tool and a chip mounting seat 32 is formed to the outside edge of the extreme end 31b of the tool main body 31. The chip mounting seat 32 is composed of a seat bottom surface 32a shown in FIG. 1 which forms a plane surface parallel with the center of rotation CT of the end mill 100 and a pair of chip positioning wall surfaces 32b, 32b steeply standing from the seat bottom surface 32a and intersecting to each other at right angles as shown in FIG. 2.

Further, a mounting screw hole 33 which intersects the seat bottom surface 32a at right angles is formed at the center of the seat bottom surface 32a of FIG. 1.

A seat 35 is seated on the seat bottom surface 32a. The seat 35 is composed of a hard material such as cemented carbide, high speed steel or the like, formed to a square flat-sheet shape and has a back surface arranged as a seating surface 35a to be seated on the seat bottom surface 32a of the chip mounting seat 32 and a front surface arranged as a chip seating surface 35b on which a throw away chip 37 is seated. Further, the side surfaces of the seat 35 are abutted against the chip positioning wall surfaces 32b, 32b of the chip mounting seat 32 and a locking hole 35c communicating with the mounting screw hole 33 of the chip mounting seat 32 is formed at the center of seat 35 so as to pass therethrough. The diameter of the locking hole 35c of the seat 35 is enlarged on the throw away chip 37 side thereof and forms an annular recessed portion 35e.

A screw-hole-provided screw member 36 having a screw hole 36a passing through the interior thereof is inserted into the portion covering the locking hole 35c of the seat 35 and the mounting screw hole 33 and the male screw 36b formed to the extreme end side of the screw-hole-provided screw member 36 is threaded with the mounting screw hole 33. Further, the screw-hole-provided screw member 36 has an annular projecting head portion 36c which is engaged with the annular recessed portion 35e of the locking hole 35c of the seat 35 to thereby lock the seat 35. The extreme end of the head portion 36c projects from the annular recessed portion 35e of the locking hole 35c, that is, projects from the chip seating surface 35b of the seat 35. In addition, a hexagon hole 36f is formed to the upper end of the screw hole 36a of the screw-hole-provided screw member 36 to rotate the screw-hole-provided screw member 36. Note, a cross-shaped or minus-shaped groove may be used in place of the hexagon hole 36f.

The throw away chip 37 is seated on the seat 35. The throw away chip 37 of the present invention is composed of the hard material such as the cemented carbide or the like, formed to an approximately square flat shape one size larger than the seat 35 and has a front surface arranged as a rake face 37a, a back surface on the opposite side arranged as a seating surface 37b and further four side surfaces arranged as flank faces 37c, respectively, thus the throw away chip 37 is arranged as a positive chip by forming an escape angle to each of these flank faces 37c. A cutting edge 37d used for cutting is formed to the ridgeline where the rake face 37a intersects the respective flank faces 37c. In addition, two of the four flank faces 37c of the throw away chip 37 are abutted against the chip positioning wall surfaces 32b, 32b of the chip mounting seat 32 as shown in FIG. 2.

A chip hole 37e communicating with the screw hole 36a of the screw-hole-provided screw member 36 is formed at the center of the throw away chip 37 so as to pass therethrough and the inside periphery of the chip hole 37e is formed to a taper shape for gradually reducing the diameter of the chip hole 37e toward the seat 35. A engaging portion 37f whose diameter is enlarged to an annular shape is formed to the opening end of the chip hole 37e on the seating surface 37b side thereof and a taper surface 37g whose diameter is gradually enlarged toward the opening end side is formed to the inside periphery of the engaging portion 37f. The head portion 36c of the above screw-hole-provided screw member 36 is inserted into the engaging portion 37f and the center axis CT1 of the screw-hole-provided screw member 36 is off-centered by a predetermined amount d toward the corner of the chip positioning wall surfaces 32b, 32b with respect to the center axis CT2 of the throw away chip 37 which is coincident with the center line of the chip hole 37e as shown in FIG. 2. Therefore, the diameter of the engaging recessed portion 37f at the opening end thereof is set larger than the value obtained by adding twice the predetermined amount d of the off-centered portion to the outside diameter of the head portion 36c of the screw-hole-provided screw member 36.

Further, a chip mounting screw 38 is inserted into the chip hole 37e of the throw away chip 37 as shown in FIG. 1, the head portion 38a thereof is locked to the inner periphery of the chip hole 37e and the chip mounting screw 38 is threaded with the screw hole 36a of the screw-hole-provided screw member 36.

Since the end mill 100 to which the throw away chip clamp mechanism of the present invention is applied has the arrangement as described above, the throw away chip 37 can be mounted to the tool main body 31 of the end mill 100 as described below.

That is, first, the seat 35 is seated on the seat bottom surface 32a of the chip mounting seat 32 of the tool main body 31 in the state that the locking hole 35c of the seat 35 coaxially communicates with the mounting screw hole 33 of the chip mounting seat 32. At the time, the side surfaces of the seat 35 are abutted against the chip positioning wall surfaces 32b, 32b of the chip mounting seat 32. Next, the screw-hole-provided screw member 36 is inserted from the locking hole 35c of the seat 35 to the mounting screw hole 33 of the chip mounting seat 32 and the hexagon hole 36f of the head portion 36c thereof is turned by a tool such as a hexagon wrench or the like engaged therewith to thereby cause the screw-hole-provided screw member 36 to be threaded with the mounting screw hole 33 of the chip mounting seat 32.

Then, the head portion 36c of the screw-hole-provided screw member 36 is engaged with the annular recessed portion 35e formed to the locking hole 35c of the seat 35 as well as locks the seat 35 so that it is pushed against the seat bottom surface 32a of the chip mounting seat 32.

As described above, since the seat 35 can be fixed (tentatively) by the head portion 36c of the screw-hole-provided screw member 36 before the throw away chip 37 is seated, a mounting job to be carried out thereafter can be simplified. Further, the seat 35 can be accurately and securely mounted to the chip mounting seat 32.

In addition, the head portion 36c of the screw-hole-provided screw member 36 is projected from the annular recessed portion 35e of the seat 35 at the time. In other words, it is projected from the chip seating surface 35b of the seat 35.

Next, the throw away chip 37 is seated on the seat 35. At the time, the two of the four flank faces 37c of the throw away chip 37 shown in FIG. 2 are abutted against the chip positioning wall surfaces 32b, 32b. Then, the center axis CT2 of the throw away chip 37 is disposed by being off-centered in the direction where it is separated from the corner of the chip positioning wall surfaces 32b, 32b with respect to the center axis CT1 shown in FIG. 2 of the screw-hole-provided screw member 36 of FIG. 1. Further, since the diameter of the engaging portion 37f at the opening end thereof is set larger than the value obtained by adding twice the predetermined amount d of the off-centered portion to the outside diameter of the head portion 36c of the screw-hole-provided screw member 36 at the time, the head portion 36c of the screw-hole-provided screw member 36 is inserted into the engaging recessed portion 37f of the throw away chip 37. As shown in FIG. 1, the chip hole 37e of the throw away chip 37 is caused to communicate with the screw hole 36a of the screw-hole-provided screw member 36 in the state that they are off-centered likewise and the head portion 36c of the screw-hole-provided screw member 36 is caused to be contact with or approach to the portion of the taper surface 37g of the engaging portion 37f of the throw away chip 37 on the chip positioning wall surfaces 32b, 32b side thereof.

Then, the chip mounting screw 38 is inserted into the screw hole 36a of the screw-hole-provided screw member 36 from the chip hole 37e of the throw away chip 37 and threaded with the screw hole 36a of the screw-hole-provided screw member 36 and the head portion 38a thereof is engaged with the inside periphery of the chip hole 37e. When the chip mounting screw 38 is more tightened, the throw away chip 37 is pressed against and fixed to the seat bottom surface 32a of the chip mounting seat 32 through the seat 35. At the time, since the screw-hole-provided screw member 36 is more inserted into the inside of the engaging portion 37f of the throw away chip 37 relatively, the head portion 36c of the screw-hole-provided screw member 36 is relatively moved to the portion of smaller diameter of the taper surface 37g of the engaging portion 37f on the chip positioning wall surfaces 32b, 32b sides thereof and pressed against or caused to more approach to the taper surface 37g on the chip positioning wall surfaces 32b, 32b sides thereof.

Since the chip mounting screw 38 is threaded with the screw hole 36a of the head portion 36c of the screw-hole-provided screw member 36 through the chip hole 37e of the throw away chip 37, it is off-centered toward the chip positioning wall surfaces 32b, 32b sides with respect to the center axis CT2 of the throw away chip 37. Thus, the chip mounting seat 32 sides of the head portion 38a of the chip mounting screw 38 press the inside periphery of the chip hole 37e of the throw away chip 37 on the chip positioning wall surfaces 32b, 32b sides thereof, by which the throw away chip 37 is positioned by being pressed against the chip positioning wall surfaces 32b, 32b of the chip mounting seat 32.

Since the interval between the position where the head portion 38a of the chip mounting screw 38 (that is, the position of the chip hole 37e of the throw away chip 37) and the position where the chip mounting screw 38 is threaded is more shorter than that of the conventional example shown in FIG. 6, the chip mounting screw 38 is more difficult to be bent and deformed than the conventional example by a force such as a centrifugal force or the like which tends to separate the throw away chip 37 of FIG. 1 from the chip positioning wall surfaces 32b, 32b. Thus, the chip mounting screw 38 can exhibit the dislocation prevention effect of the throw away chip 37 which is higher than a conventional one.

When a force large enough to bend the chip mounting screw 38 acts on the throw away chip 37 and the throw away chip 37 is insisted to separate from the chip positioning wall surfaces 32b, 32b, the head portion 36c of the screw-hole-provided screw member 36 locks the taper surface 37g of the engaging portion 37f of the throw away chip 37 on the chip positioning wall surfaces 32b, 32b sides thereof. With this action, the position dislocation prevention effect of the throw away chip 37 can be more enhanced.

Since the number of parts can be reduced by the mounting of the throw away chip 37 as described above as compared with the case that the seat 25 is locked by the plurality of pins 26, 26 as in the case of the conventional example shown in FIG. 6 as well as no small parts such as the pins 26, 26 are used, the throw away chip 37 can be simply mounted through the seat 35 as shown in FIG. 1.

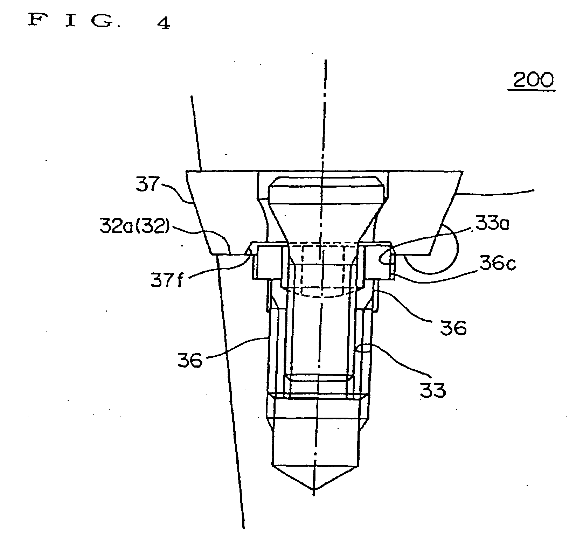

FIG. 4 is a front cross sectional view showing another embodiment of the throw away chip clamp mechanism and a throw away type end mill 200 to which the throw away chip clamp mechanism is applied is similar to the end mill 100 of FIG. 1 from which the seat 35 is omitted.

That is, as shown in FIG. 4, the end mill 200 is arranged such that an annular recessed portion 33a having an enlarged diameter is formed to the opening end of the mounting screw hole 33 of the seat bottom portion 32a of a chip mounting seat 32 and a screw-hole-provided screw member 36 is threaded with the mounting screw hole 33 with the head portion 36c thereof engaged with the annular recessed portion 33a and the extreme end of the head portion 36c projecting from the seat bottom surface 32a of the chip mounting seat 32. A throw away chip 37 is seated on the chip mounting seat 32 in the state that the engaging portion 37f thereof is engaged with the head portion 36c of the screw-hole-provided screw member 36. An effect similar to that of the embodiment of FIG. 1 can also be achieved in this embodiment except the locking of the seat 35.

Although the above two embodiments show the case that the throw away chip for a clamp mechanism of the present invention is applied to the end mills, it is needless to say that the throw away chip of the present invention is also applicable to a throw away type byte, boring bar, cutter and the like. Further, the present invention includes the arrangement that the diameters of the head portion 36c of the screw-hole-provided screw member 36 and the engaging portion 37f are not enlarged.

### Advantages

Since the chip mounting screw is difficult to bend, when a force for separating the throw away chip from the chip positioning wall surfaces is applied by a centrifugal force or the like, a high displacement prevention effect can be exhibited by locking the chip mounting screw and even if the throw away chip is insisted to separate from the chip positioning wall surfaces against the chip mounting screw, it is locked by the screw-hole-provided screw member, by which the dislocation prevention effect can be enhanced. With this arrangement, the dislocation prevention effect of the throw away chip can be enhanced.

Further, since the throw away chip is mounted by the small number of parts without using small parts, a mounting job can be simplified.

### Reference Numerals

- 31: Tool main body
- 32: Chip mounting seat
- 32a: Seat bottom surface
- 32b: Chip positioning wall surface
- 33: Mounting screw hole
- 35: Seat 35
- 35c: Locking hole
- 36: Screw-hole-provided screw member
- 36a: Screw hole
- 36c: Head portion
- 37: Throw away chip
- 37e: Chip hole
- 37f: Engaging portion
- 38: Chip mounting screw
- 38a: Head portion

## Claims

1. A throw away chip (37) for mounting to a seat (32) of a chip clamp mechanism using a screw-hole-provided screw-member (36), the center axis of the screw-hole -provided screw member (36) being off-centered by a predetermined amount (d) toward the corner of a chip positioning wall surface (32b) of the chip mounting seat (32), said chip being approximately a square flat shape and comprising:
a front surface (37a);
a back surface arranged as a seating surface (37b);
the front surface being larger than said back surface;
four side surfaces arranged as flank surfaces (37c);
a cutting edge (37d) formed by a ridgeline where a flank surface (37c) intersects said front surface (37a);
an annular shaped and tapered recessed portion (37f) in said back surface (37b), wherein the diameter of the recessed portion (37f) at its opening end is set larger than the value obtained by adding twice the predetermined amount (d) of the off-centered portion to the outside diameter of a head portion (36c) of the screw-hole-provided screw-member (36);
a chip hole (37e) formed at the center of the throw away chip (37) so as to pass therethrough from said front surface (37a) to said tapered recessed portion (37f) to accommodate a chip mounting screw (38) for securing the throw away chip to said chip clamping mechanism;
said chip hole (37e) having an inside periphery formed to a taper shape for gradually reducing the diameter of the chip hole (37e) towards said annular shaped and tapered recessed portion (37f).

2. A throw away chip (37) as in claim 1 and wherein said front surface (37a) is arranged as a rake face.

## Patentansprüche

1. Einweg-Chip (37) zur Befestigung an einem Sitz (32) eines Chip-Klemmmechanismus, der ein mit einem Schraubloch versehenes Schraubelement (36) verwendet, wobei die zentrale Achse des mit einem Schraubloch versehenen Schraubelements (36) um ein vorab bestimmtes Maß (d) zur Ecke einer Chip-Positionierungs-Wandoberfläche (32b) des Chip-Befestigungssitzes (32) versetzt ist, wobei der Chip eine nahezu quadratische, flache Form aufweist und umfasst:
eine vordere Oberfläche (37a);
eine hintere Oberfläche, die als Sitzoberfläche (37b) eingerichtet ist;
wobei die vordere Oberfläche größer als die hintere Oberfläche ist;
vier Seitenoberflächen als Flankenoberflächen (37c) eingerichtet sind;
eine Schneidkante (37d) durch eine Gratlinie dort ausgebildet ist, wo eine Flankenoberfläche (37c) die vordere Oberfläche (37a) schneidet;
einen ringförmig geformten und konisch vertieften Abschnitt (37f) in der hinteren Oberfläche (37b), wobei der Durchmesser des vertieften Abschnitts (37f) an dessen Öffnungsende größer eingestellt ist als der Wert, der durch zweifaches Addieren des vorab bestimmten Maßes (d) des versetzten Abschnitts zum Außendurchmesser eines Kopfabschnitts (36c) des mit einem Schraubloch versehenen Schraubenelements (36) erhalten wird;
ein Chiploch (37e), das am Zentrum des Einweg-Chips (37) derart ausgebildet ist, dass es von der vorderen Oberfläche (37a) zum konisch vertieften Abschnitt (37f) hindurch verläuft, um eine Chip-Befestigungsschraube (38) zum Absichern des Einweg-Chips an dem Chip-Klemmmechanismus aufzunehmen;
wobei das Chiploch (37e) einen Innenumfang aufweist, der zu einer Konusform ausgebildet ist, um den Durchmesser des Chiplochs (37e) zum ringförmig geformten und konisch vertieften Abschnitt (37f) hin schrittweise zu reduzieren.

2. Einweg-Chip (37) gemäß Anspruch 1, wobei die vordere Oberfläche (37a) als Spanwinkel eingerichtet ist.

## Revendications

1. Plaquette de coupe (37) destinée à être montée sur un siège (32) d'un mécanisme de serrage pour plaquette utilisant un trou de vis muni d'un élément de vis (36), l'axe central du trou de vis muni de l'élément de vis (36) étant décalé d'une quantité prédéterminée (d) vers le coin d'une surface de parois de positionnement de la plaquette (32b) du siège de montage de plaquette (32), ladite plaquette présentant approximativement une forme carrée plate et comprenant :
une surface avant (37a) ;
une surface arrière disposée en tant que surface d'assise (37b);
la surface avant étant plus grande que ladite surface arrière ;
quatre surfaces latérales disposées en tant que surfaces de dépouille (37c) ;
un tranchant (37d) formé par une ligne de crête dans laquelle une surface de dépouille (37c) croise ladite surface avant (37a) ;
une partie évidée de forme annulaire et conique (37f) dans ladite surface arrière (37b), dans laquelle le diamètre de la partie évidée (37f) au niveau de son extrémité d'ouverture est réglé plus grand que la valeur obtenue en ajoutant deux fois la quantité prédéterminée (d) de la partie décalée vers le diamètre extérieur d'une partie de tête (36c) du trou de vis muni de l'élément de vis (36) ;
un trou de plaquette (37e) formé au centre de la plaquette de coupe (37) de manière à passer à travers celle-ci, de ladite surface avant (37a) à ladite partie évidée conique (37f), afin de loger une vis de montage de plaquette (38) destinée à fixer la plaquette de coupe audit mécanisme de serrage pour plaquette de coupe ;
ledit trou de plaquette (37e) ayant une périphérie intérieure revêtant une forme conique pour réduire graduellement le diamètre du trou de plaquette (37e) vers ladite partie évidée de forme annulaire et conique (37f).

2. Plaquette de coupe (37) selon la revendication 1, dans laquelle ladite surface avant (37a) est disposée en tant que face d'inclinaison.
